# EUROPEAN PATENT APPLICATION

(11) **EP 4 738 118 A1**
(43) Date of publication of application: **06.05.2026**
(21) Application number: 24853253.3
(22) Date of filing: 30.04.2024
(51) Int. Cl.: G06F 9/50, G06F 3/06

(54) **MEMORY MANAGEMENT METHOD, MEMORY MANAGEMENT APPARATUS AND ELECTRONIC DEVICE**

(30) Priority: 16.08.2023 CN 202311039158
(71) Applicant: Huawei Technologies Co., Ltd., Shenzhen, Guangdong 518129 (CN)
(72) Inventor: SONG, Yuanzheng, Shenzhen, Guangdong 518129 (CN); WANG, Chengke, Shenzhen, Guangdong 518129 (CN); JI, Kecheng, Shenzhen, Guangdong 518129 (CN); LIN, Haiming, Shenzhen, Guangdong 518129 (CN); LI, Xuhui, Shenzhen, Guangdong 518129 (CN)
(74) Representative: Isarpatent
(86) International application number: PCT/CN2024/090731
(87) International publication number: WO 2025/035837

(57) **Abstract**

Embodiments of this application provide a memory management method, a memory management apparatus, and an electronic device. The memory management method includes: receiving a first input of a user, where the first input is used to enable a first application to enter a background state; blocking an interface related to access to a buffer in a first buffer set, where the buffer in the first buffer set belongs to a buffer related to decoding of a first video played by the first application; and reclaiming physical memory corresponding to the buffer in the first buffer set. According to the memory management method, the memory management apparatus, and the electronic device provided in embodiments of this application, physical memory corresponding to a buffer related to video decoding can be reclaimed, so that available physical memory of an entire system is increased. This increases a response speed of the electronic device and improves user experience.

## Description

This application claims priority to Chinese Patent Application No. 202311039158.5, filed with the China National Intellectual Property Administration on August 16, 2023 and entitled "MEMORY MANAGEMENT METHOD, MEMORY MANAGEMENT APPARATUS, AND ELECTRONIC DEVICE", which is incorporated herein by reference in its entirety.

### TECHNICAL FIELD

Embodiments of this application relate to the field of electronic technologies, and more specifically, to a memory management method, a memory management apparatus, and an electronic device.

### BACKGROUND

When an application enters the background, an operating system may perform memory reclamation in various manners when memory is insufficient, for example, perform memory reclamation in a manner like page discarding, page swapping, or page write-back, to relieve memory pressure.

In a video playing scenario, a large quantity of input or output buffers are used. After a video enters the background, a related buffer is not destructed, and still occupies a large amount of physical memory. As a result, memory of an electronic device becomes smaller as a quantity of video applications started by a user increases. In addition, the video application and a hardware decoder invoked by a media module usually share physical memory, but the operating system does not have a memory reclamation mechanism for the shared memory.

### SUMMARY

Embodiments of this application provide a memory management method, a memory management apparatus, and an electronic device, so that a buffer related to video decoding can be reclaimed when a video is played in the background; and normal video playing is not affected when a video playing application is switched back to the foreground subsequently. This improves user experience.

According to a first aspect, a memory management method is provided, applied to an electronic device, and including: receiving a first input of a user, where the first input is used to enable a first application to enter a background state; blocking an interface related to access to a buffer in a first buffer set, where the buffer in the first buffer set belongs to a buffer related to decoding of a first video played by the first application; and reclaiming physical memory corresponding to the buffer in the first buffer set.

When the first video is played in the background, playing of the first video is paused. In this embodiment, when the first video is in the background, physical memory corresponding to the buffer related to decoding of the first video may be reclaimed, and an interface related to access to the corresponding buffer may be blocked. In this way, even if a plurality of video applications are run in the background, occupied memory of an entire system is reduced, and a response speed of the electronic device to the user is increased. This improves user experience.

With reference to the first aspect, in some implementations of the first aspect, the method further includes: receiving a second input of the user, where the second input is used to switch the first application back to a foreground state; reallocating physical memory to the buffer in the first buffer set; and unblocking the interface related to the access to the buffer in the first buffer set.

In this embodiment, after the first application is switched back to the foreground, the first video automatically starts to be played or continues to be played after a user operation. In this case, the physical memory needs to be reallocated to the buffer whose the physical memory is reclaimed, and the related interface needs to be unblocked after the physical memory is reallocated. Therefore, successive playing of the first video is not affected.

Optionally, after the first video enters the background, the first application may be cleared due to an Android memory clearance mechanism or manually cleared by the user. In this case, the first application needs to be cold started to be switched back to the foreground. In this case, there is no need to reallocate the physical memory to the buffer whose physical memory is reclaimed.

With reference to the first aspect, in some implementations of the first aspect, the first buffer set includes at least one of a second buffer, a third buffer, a fourth buffer, and a fifth buffer, where the second buffer is an empty input buffer that is in an input buffer queue and that is held by a media module; the third buffer is an output buffer that is being filled with a decoding result and that is held by the media module; the fourth buffer is an output buffer that is filled with a decoding result, that is to be used by the first application, that is in an output buffer queue, and that is held by the media module; the fifth buffer is an output buffer that is filled with a decoding result and that is held by the first application; and the media module is configured to decode the first video.

In this embodiment, a buffer in a specific state may be reclaimed based on a status of the buffer related to decoding of the first video; and for buffers in different statuses, physical memory reclamation may be performed according to different reclamation policies.

In some embodiments, physical memory corresponding to a buffer may be reclaimed based on a memory state level of the electronic device. For example, the electronic device is classified into a first memory insufficiency state and a second memory insufficiency state, and a memory insufficiency degree of the first memory insufficiency state is lower than that of the second memory insufficiency state. When the electronic device is in the first memory insufficiency state, only the physical memory corresponding to the buffer, held by the media module, in the second buffer to the fifth buffer is reclaimed; and when the electronic device is in the second memory insufficiency state, the fifth buffer held by the first application is additionally reclaimed. Another policy may alternatively be used. For example, the electronic device is classified into more levels based on memory insufficiency states. In addition, different memory is reclaimed for different levels; or although physical memory corresponding to a same buffer is reclaimed for different levels, different reclamation manners may be used. For example, for the third buffer, if the memory is extremely insufficient, the physical memory may be reclaimed through re-decoding, or if the memory is not extremely insufficient, reclaiming may be performed after the decoding result is stored.

With reference to the first aspect, in some implementations of the first aspect, blocking the interface related to the access to the buffer in the first buffer set includes: freezing at least one process or thread of the first application when the at least one process or thread of the first application uses the interface related to the access to the buffer in the first buffer set; and unblocking the interface related to the access to the buffer in the first buffer set includes: unfreezing the at least one process or thread of the first application.

In this embodiment, the electronic device may monitor an interface to be blocked, for example, by setting code at a corresponding interface, organize a process or thread to use the corresponding interface. When a corresponding process or thread of the first application accesses a corresponding interface, the process or thread is directly frozen, and after physical memory is reallocated, the corresponding process or thread may be unfrozen.

Optionally, for blocking of a part of applications, error code (for example, -EAGAIN) may be directly returned when the applications access a corresponding interface, and when receiving the error code, the part of applications do not consider that the media module is faulty, and still continue to use the media module.

With reference to the first aspect, in some implementations of the first aspect, when the first buffer set includes the third buffer, reclaiming the physical memory corresponding to the buffer in the first buffer set includes: recording a decoding location corresponding to the decoding result filling the third buffer, and reclaiming physical memory corresponding to the third buffer; and reallocating the physical memory to the buffer in the first buffer set includes: reallocating physical memory to the third buffer, re-decoding, based on the decoding location, data corresponding to the decoding result, and then filling the reallocated physical memory; or reclaiming the physical memory corresponding to the buffer in the first buffer set includes: compressing the decoding result filling the third buffer, and reclaiming physical memory corresponding to the third buffer; and reallocating the physical memory to the buffer in the first buffer set includes: reallocating physical memory to the third buffer, decompressing the compressed decoding result, and then filling the reallocated physical memory; or reclaiming the physical memory corresponding to the buffer in the first buffer set includes: swapping out, through page swapping, the decoding result filling the third buffer, and reclaiming physical memory corresponding to the third buffer; and reallocating the physical memory to the buffer in the first buffer set includes: reallocating physical memory to the third buffer, and swapping the swapped-out decoding result in the reallocated physical memory.

In this embodiment, the third buffer is the output buffer that is being filled with the decoding result and that is held by the media module; and the buffer may be reclaimed in a manner of directly discarding the decoding result and performing re-decoding during rebuilding, or may be reclaimed in a manner of storing the decoding result and filling rebuilt physical memory with the stored decoding result after the physical memory is rebuilt, where the decoding result may be stored in another location of the memory, a memory swap area (or swap space), or an external storage medium in a compressed or uncompressed manner, for example, a hard disk or magnetic disk of the electronic device.

With reference to the first aspect, in some implementations of the first aspect, when the first buffer set includes the fourth buffer, reclaiming the physical memory corresponding to the buffer in the first buffer set includes: compressing the decoding result filling the fourth buffer, and reclaiming physical memory corresponding to the fourth buffer; and reallocating the physical memory to the buffer in the first buffer set includes: reallocating physical memory to the fourth buffer, decompressing the compressed decoding result, and then filling the reallocated physical memory; or reclaiming the physical memory corresponding to the buffer in the first buffer set includes: swapping out the decoding result in the fourth buffer through page swapping, and reclaiming physical memory corresponding to the fourth buffer; and reallocating the physical memory to the buffer in the first buffer set includes: reallocating physical memory to the fourth buffer, and swapping the swapped-out decoding result in the reallocated physical memory.

In this embodiment, the fourth buffer is the buffer that is filled with the decoding result and that is to be consumed by the first application. The decoding result stored in the fourth buffer cannot be re-decoded after memory is rebuilt. Therefore, the physical memory needs to be reclaimed after storage. Alternatively, the decoding result is stored in a compressed or uncompressed manner, and then physical memory may be refilled with the decoding result after being rebuilt.

With reference to the first aspect, in some implementations of the first aspect, when the first buffer set includes the fifth buffer, reclaiming the physical memory corresponding to the buffer in the first buffer set includes: discarding the decoding result filling the fifth buffer, and reclaiming physical memory corresponding to the fifth buffer; or reclaiming the physical memory corresponding to the buffer in the first buffer set includes: compressing the decoding result filling the fifth buffer, and reclaiming physical memory corresponding to the fifth buffer; and reallocating the physical memory to the buffer in the first buffer set includes: reallocating physical memory to the fifth buffer, decompressing the compressed decoding result, and then filling the reallocated physical memory; or reclaiming the physical memory corresponding to the buffer in the first buffer set includes: swapping out the decoding result in the fifth buffer through page swapping, and reclaiming physical memory corresponding to the fifth buffer; and reallocating the physical memory to the buffer in the first buffer set includes: reallocating physical memory to the fifth buffer, and swapping the swapped-out decoding result in the reallocated physical memory.

In this embodiment, for the output buffer that is filled with the decoding result and that is held by the first application, the physical memory may be reclaimed in a manner of directly discarding data in the output buffer, and the data is no longer restored after memory is rebuilt. Therefore, when the first video continues to be played, after the first application transfers the fifth buffer to the media module for display, the data to be sent for display is lost, resulting in temporary frame freezing of the first video. However, because a small amount of data is discarded, video watching experience of the user is not greatly affected, and this manner may be implemented when the memory of the electronic device is insufficient, to release more physical memory.

Optionally, the decoding result in the fifth buffer may alternatively be stored in a compressed or uncompressed manner, and data is restored after physical memory is rebuilt, to reduce impact on video experience of the user.

With reference to the first aspect, in some implementations of the first aspect, the interface related to the access to the buffer in the first buffer set includes a first interface and a second interface, the first interface is used by the first application to obtain the second buffer, and the second interface is used by the first application to obtain the fourth buffer.

Optionally, the interface related to the access to the buffer in the first buffer set further includes a third interface, and the third interface is used by the first application to release the fifth buffer.

In this embodiment, different interfaces may be blocked based on a buffer of to-be-reclaimed physical memory. When the physical memory corresponding to the fifth buffer needs to be reclaimed, the third interface may be blocked. When the physical memory corresponding to the fifth buffer does not need to be reclaimed, only the first interface and the second interface may be reclaimed.

With reference to the first aspect, in some implementations of the first aspect, when the first application uses the media module in a synchronous mode, the first interface is used by the first application to actively obtain the second buffer, and the second interface is used by the first application to actively obtain the fourth buffer; or when the first application uses the media module in an asynchronous mode, the first interface is used by the first application to obtain the second buffer actively released by the media module, and the second interface is used by the first application to obtain the fourth buffer actively released by the media module.

With reference to the first aspect, in some implementations of the first aspect, before reclaiming the physical memory corresponding to the buffer in the first buffer set, the method further includes: waiting for preset duration.

In this embodiment, the preset duration may be duration between a moment at which the media module learns that the first application enters the background state and a moment of determining the buffer of the to-be-reclaimed physical memory. Because the media module waits for the preset duration, the media module may continue processing for a period of time, for example, 200 ms, so that more buffers can be reclaimed. For example, in the preset duration, to-be-decoded data in a sixth buffer may be consumed by the media module, and the sixth buffer is an input buffer that is filled with the to-be-decoded data and that is transferred by the first application to the media module. Therefore, the sixth buffer becomes an empty input buffer, a quantity of buffers of physical memory that can be reclaimed can be increased, and more physical memory can be reclaimed. This improves user experience.

According to a second aspect, an electronic device is provided, including one or more processors and one or more storages. The one or more storages store one or more computer programs. The one or more computer programs include instructions. When the instructions are executed by the one or more processors, the memory management method in any one of the first aspect and the possible implementations of the first aspect is performed.

According to a third aspect, a memory management apparatus is provided, including a module configured to implement the memory management method in any one of the first aspect and the possible implementations of the first aspect.

According to a fourth aspect, a chip is provided. The chip includes a processor and a communication interface. The communication interface is configured to receive a signal and transmit the signal to the processor. The processor processes the signal, so that the memory management method in any one of the first aspect and the possible implementations of the first aspect is performed.

According to a fifth aspect, a readable storage medium is provided. The readable storage medium stores instructions, and when the instructions run on a device, the memory management method in any one of the first aspect and the possible implementations of the first aspect is performed.

According to a sixth aspect, a program product is provided. The program product includes program code, and when the program code is run on a device, the memory management method in any one of the first aspect and the possible implementations of the first aspect is performed.

### BRIEF DESCRIPTION OF DRAWINGS

FIG. 1 is a diagram of a structure of an electronic device according to an embodiment of this application;
FIG. 2 is a diagram of a software structure of an electronic device according to an embodiment of this application;
FIG. 3 is a diagram of a circulating process of a buffer in a case in which a first application plays a video;

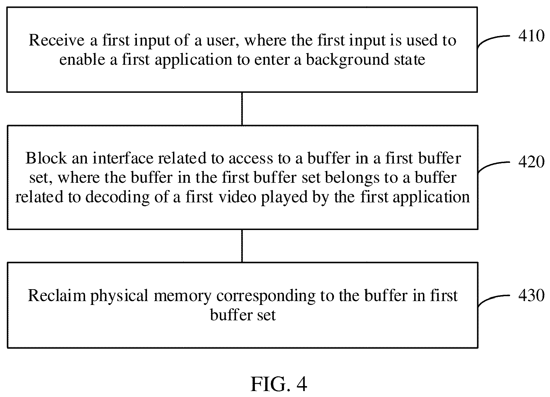

FIG. 4 is a schematic flowchart of a memory management method according to an embodiment of this application;
FIG. 5 is a flowchart of reclaiming physical memory and rebuilding physical memory;
FIG. 6 is a diagram of a buffer in a first video decoding process according to an embodiment of this application;
FIG. 7 is a diagram of interfaces used by a first application in a synchronous mode and an asynchronous mode to obtain and release input or output buffers;
FIG. 8 is a schematic flowchart of an interface blocking process;
FIG. 9 is a block diagram of a memory management apparatus according to an embodiment of this application; and
FIG. 10 is a block diagram of a memory management apparatus according to an embodiment of this application.

### DESCRIPTION OF EMBODIMENTS

The following describes technical solutions of embodiments in this application with reference to accompanying drawings.

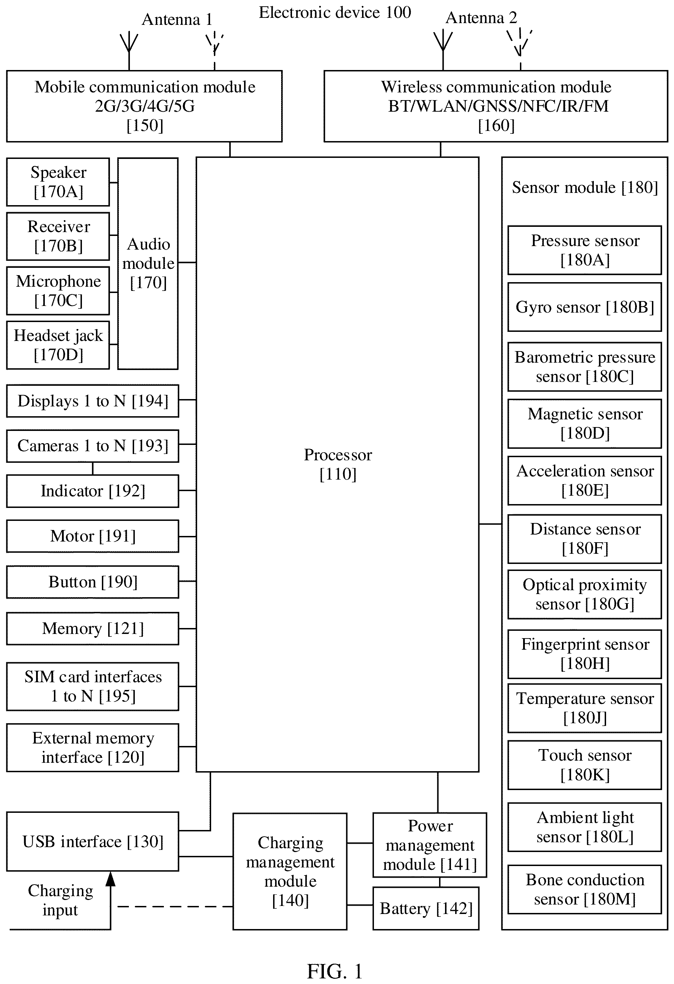

FIG. 1 is a diagram of a structure of an electronic device 100. The electronic device 100 may include a processor 110, an external memory interface 120, a memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identity module (subscriber identification module, SIM) card interface 195, and the like. The sensor module 180 may include a pressure sensor 180A, a gyro sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It may be understood that the structure shown in this embodiment of this application does not constitute a specific limitation on the electronic device 100. In some other embodiments of this application, the electronic device 100 may include more or fewer components than those shown in the figure, combine some components, split some components, or have different component arrangements. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a storage, a video codec, a digital signal processor (digital signal processor, DSP), a baseband processor, a neural-network processing unit (neural-network processing unit, NPU), and/or the like. Different processing units may be independent components, or may be integrated into one or more processors.

The controller may be a nerve center and a command center of the electronic device 100. The controller may generate an operation control signal based on instruction operation code and a time sequence signal, to complete control of instruction reading and instruction execution.

A storage may be further disposed in the processor 110, and is configured to store instructions and data. In some embodiments, the storage in the processor 110 is a cache. The storage may store instructions or data recently used or cyclically used by the processor 110. If the processor 110 needs to use the instructions or the data again, the processor may directly invoke the instructions or the data from the storage. This avoids repeated access, and reduces waiting time of the processor 110, thereby improving system efficiency.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

The I2C interface is a bidirectional synchronous serial bus, and includes a serial data line (serial data line, SDA) and a serial clock line (serial clock line, SCL).

The I2S interface may be configured to perform audio communication. In some embodiments, the processor 110 may include a plurality of groups of I2S buses. The processor 110 may be coupled to the audio module 170 through the I2S bus, to implement communication between the processor 110 and the audio module 170.

The PCM interface may also be configured to perform audio communication, and sample, quantize, and code an analog signal. In some embodiments, the audio module 170 may be coupled to the wireless communication module 160 through a PCM bus interface.

The UART interface is a universal serial data bus, and is configured to perform asynchronous communication. The bus may be a two-way communication bus. The bus converts to-be-transmitted data between serial communication and parallel communication. In some embodiments, the UART interface is usually configured to connect the processor 110 to the wireless communication module 160.

The MIPI interface may be configured to connect the processor 110 to a peripheral component such as the display 194 or the camera 193.

The GPIO interface may be configured by software. The GPIO interface may be configured as a control signal or a data signal. In some embodiments, the GPIO interface may be configured to connect the processor 110 to the camera 193, the display 194, the wireless communication module 160, the audio module 170, the sensor module 180, or the like.

The USB interface 130 is an interface that conforms to a USB standard specification, and may be specifically a mini USB interface, a micro USB interface, a USB type-C interface, or the like. The USB interface 130 may be configured to connect to a charger to charge the electronic device 100, or may be configured to transmit data between the electronic device 100 and a peripheral device.

It may be understood that an interface connection relationship between the modules illustrated in embodiments of this application is merely an example for description, and does not constitute a limitation on the structure of the electronic device 100. In some other embodiments of this application, the electronic device 100 may alternatively use an interface connection manner different from that in the foregoing embodiment, or use a combination of a plurality of interface connection manners.

The charging management module 140 is configured to receive a charging input from the charger. The charger may be a wireless charger or a wired charger. In some embodiments of wired charging, the charging management module 140 may receive a charging input of a wired charger through the USB interface 130. In some embodiments of wireless charging, the charging management module 140 may receive a wireless charging input through a wireless charging coil of the electronic device 100. The charging management module 140 supplies power to the electronic device through the power management module 141 while charging the battery 142.

The power management module 141 is configured to connect the battery 142, the charging management module 140, and the processor 110.

A wireless communication function of the electronic device 100 may be implemented through the antenna 1, the antenna 2, the mobile communication module 150, the wireless communication module 160, the modem processor, the baseband processor, and the like.

The mobile communication module 150 may provide a wireless communication solution that is applied to the electronic device 100 and that includes 2G/3G/4G/5G and the like.

The modem processor may include a modulator and a demodulator. The modulator is configured to modulate a to-be-sent low-frequency baseband signal into a medium-high-frequency signal. The demodulator is configured to demodulate a received electromagnetic wave signal into a low-frequency baseband signal. Then, the demodulator transmits the low-frequency baseband signal obtained through demodulation to the baseband processor for processing. The low-frequency baseband signal is processed by the baseband processor and then transmitted to the application processor. The application processor outputs a sound signal through an audio device (which is not limited to the speaker 170A, the receiver 170B, or the like), or displays an image or a video through the display 194. In some embodiments, the modem processor may be an independent component. In some other embodiments, the modem processor may be independent of the processor 110, and is disposed in a same component as the mobile communication module 150 or another functional module.

The wireless communication module 160 may provide a wireless communication solution that is applied to the electronic device 100, and that includes a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, or the like.

In some embodiments, the antenna 1 and the mobile communication module 150 in the electronic device 100 are coupled, and the antenna 2 and the wireless communication module 160 in the electronic device 100 are coupled, so that the electronic device 100 can communicate with a network and another device by using a wireless communication technology.

The electronic device 100 may implement a display function through the GPU, the display 194, the application processor, and the like. The GPU is a microprocessor for image processing, and is connected to the display 194 and the application processor. The GPU is configured to perform mathematical and geometric calculation, and is configured to render an image. The processor 110 may include one or more GPUs that execute program instructions to generate or change display information.

The display 194 is configured to display an image, a video, and the like. The display 194 includes a display panel. The display panel may be a liquid crystal display (liquid crystal display, LCD), an organic light-emitting diode (organic light-emitting diode, OLED), an active-matrix organic light-emitting diode or active-matrix organic light emitting diode (active-matrix organic light emitting diode, AMOLED), a flexible light-emitting diode (flex light-emitting diode, FLED), a mini-LED, a micro-LED, a micro-OLED, a quantum dot light-emitting diode (quantum dot light emitting diode, QLED), or the like. In some embodiments, the electronic device 100 may include one or N displays 194, where N is a positive integer greater than 1.

The electronic device 100 may implement a photographing function through the ISP, the camera 193, the video codec, the GPU, the display 194, the application processor, and the like.

The ISP is configured to process data fed back by the camera 193. The camera 193 is configured to capture a static image or a video.

The digital signal processor is configured to process a digital signal, and may process another digital signal in addition to a digital image signal.

The video codec is configured to compress or decompress a digital video. The electronic device 100 may support one or more video codecs.

The external memory interface 120 may be used to connect to an external storage card, for example, a micro SD card, to extend a storage capability of the electronic device 100.

The memory 121 may be configured to store computer-executable program code. The executable program code includes instructions. The processor 110 runs the instructions stored in the memory 121, to perform various function applications of the electronic device 100 and data processing.

The electronic device 100 may implement audio functions such as music playing and recording, through the audio module 170, the speaker 170A, the receiver 170B, the microphone 170C, the headset jack 170D, the application processor, and the like.

The audio module 170 is configured to convert digital audio information into an analog audio signal for output, and is also configured to convert analog audio input into a digital audio signal.

The loudspeaker 170A, also referred to as a "horn", is configured to convert an audio electrical signal into a sound signal.

The receiver 170B, also referred to as an "earpiece", is configured to convert an audio electrical signal into a sound signal.

The microphone 170C, also referred to as a "mike" or a "mic", is configured to convert a sound signal into an electrical signal.

The headset jack 170D is configured to connect to a wired headset.

The pressure sensor 180A is configured to sense a pressure signal, and can convert the pressure signal into an electrical signal. In some embodiments, the pressure sensor 180A may be disposed on the display 194.

The gyro sensor 180B may be configured to determine a motion posture of the electronic device 100.

The barometric pressure sensor 180C is configured to measure barometric pressure. In some embodiments, the electronic device 100 calculates an altitude based on a barometric pressure value measured by the barometric pressure sensor 180C, to assist in positioning and navigation.

The acceleration sensor 180E may detect accelerations in various directions (usually on three axes) of the electronic device 100.

The distance sensor 180F is configured to measure a distance.

The fingerprint sensor 180H is configured to collect a fingerprint.

The touch sensor 180K is also referred to as a "touch panel". The touch sensor 180K may be disposed on the display 194, and the touch sensor 180K and the display 194 form a touchscreen, which is also referred to as a "touchscreen".

The bone conduction sensor 180M may obtain a vibration signal. In some embodiments, the bone conduction sensor 180M may obtain a vibration signal of a vibration bone of a human vocal-cord part. The bone conduction sensor 180M may also be in contact with a body pulse to receive a blood pressure beating signal.

The button 190 includes a power button, a volume button, and the like.

The motor 191 may generate a vibration prompt.

The indicator 192 may be an indicator, and may be configured to indicate a charging state and a power change, or may be configured to indicate a message, a missed call, a notification, and the like.

The SIM card interface 195 is configured to connect to a SIM card.

A software system of the electronic device 100 may use a layered architecture, an event-driven architecture, a microkernel architecture, a micro service architecture, or a cloud architecture. In this embodiment of this application, an Android^{®} system with a layered architecture is used as an example to illustrate a software structure of the electronic device 100.

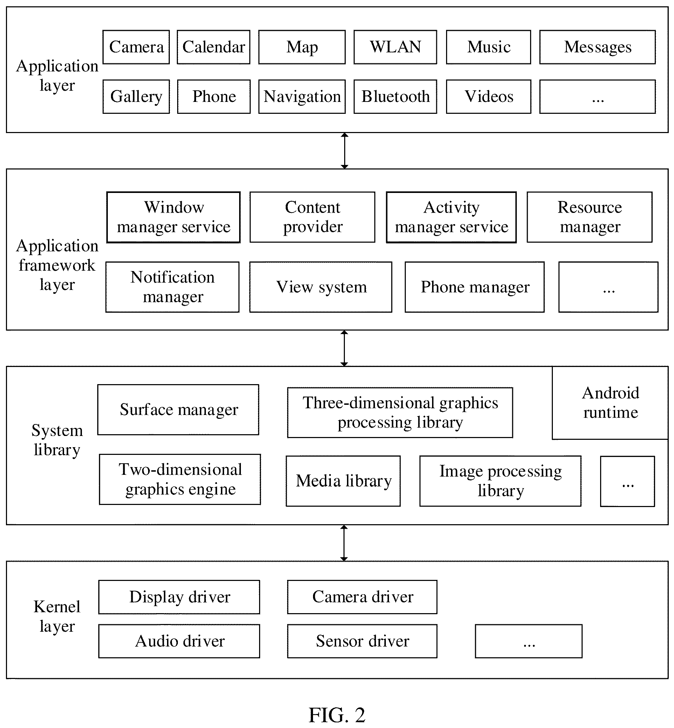

FIG. 2 is a block diagram of a software structure of an electronic device 100 according to an embodiment of this application. In a layered architecture, software is divided into several layers, and each layer has a clear role and task. The layers communicate with each other through a software interface. In some embodiments, an Android system is divided into four layers: an application layer, an application framework layer, an Android runtime (Android runtime) and system library, and a kernel layer from top to bottom. The application layer may include a series of application packages.

A first application in embodiments of this application may be at the application layer.

As shown in FIG. 2, the application packages may include applications such as Camera, Gallery, Calendar, Phone, Map, Navigation, WLAN, Bluetooth, Music, Videos, and SMS messages.

The application framework layer provides an application programming interface (application programming interface, API) and a programming framework for an application at the application layer. The application framework layer includes some predefined functions.

A media module in embodiments of this application may be at the application framework layer.

As shown in FIG. 2, the application framework layer may include a window manager service (window manager service, WMS), a content provider, an activity manager service (activity manager service, AMS), a software package manager service (package manager service, PMS), a view system, a phone manager, a resource manager, a notification manager, and the like.

The window manager is configured to manage a window program. The window manager may obtain a size of a display, determine whether there is a status bar, perform screen locking, take a screenshot, and the like.

The content provider is configured to store and obtain data, and enable the data to be accessed by an application. The data may include a video, an image, an audio, calls that are made and answered, a browsing history, a bookmark, an address book, and the like.

The activity manager service is used to manage activities, for example, a life cycle of the activity.

The software package manager service may be used to manage installation and uninstallation of an application.

The view system includes visual controls such as a control for displaying text and a control for displaying a picture. The view system may be configured to construct an application. A display interface may include one or more views. For example, a display interface including an SMS message notification icon may include a text display view and an image display view.

The phone manager is configured to provide a communication function for the electronic device 100, for example, management of a call status (including answering, declining, or the like).

The resource manager provides various resources such as a localized character string, an icon, a picture, a layout file, and a video file for an application.

The notification manager enables an application to display notification information in a status bar, and may be configured to convey a notification message. The notification manager may automatically disappear after a short pause without requiring a user interaction. For example, the notification manager is configured to notify download completion, give a message notification, and the like. The notification manager may alternatively be a notification that appears in a top status bar of the system in a form of a graph or scroll bar text, for example, a notification of an application that is run in the background, or may be a notification that appears on the screen in a form of a dialog window. For example, text information is prompted in the status bar, an alert tone is made, the electronic device vibrates, or an indicator blinks.

The Android runtime includes a kernel library and a virtual machine. The Android runtime is responsible for scheduling and management of an Android system.

The kernel library includes two parts: a function that needs to be invoked in java language, and a kernel library of Android.

The application layer and the application framework layer run on the virtual machine. The virtual machine executes java files of the application layer and the application framework layer as binary files. The virtual machine is configured to implement functions such as object lifecycle management, stack management, thread management, security and exception management, and garbage collection.

The system library may include a plurality of functional modules, for example, a surface manager (surface manager), a media library (media libraries), a three-dimensional graphics processing library (for example, OpenGL ES), and a 2D graphics engine (for example, SGL).

The surface manager is configured to manage a display subsystem and provide fusion of 2D and 3D layers for a plurality of applications.

The media library supports playback and recording in a plurality of commonly used audio and video formats, static image files, and the like. The media library may support a plurality of audio and video coding formats such as MPEG-4, H.264, MP3, AAC, AMR, JPG, and PNG.

The three-dimensional graphics processing library is configured to implement three-dimensional graphics drawing, image rendering, composition, layer processing, and the like.

The 2D graphics engine is a drawing engine for 2D drawing.

The kernel layer is a layer between hardware and software. The kernel layer includes at least a display driver, a camera driver, an audio driver, and a sensor driver.

Before the technical solutions of this application are described, the following technical terms that may be used in the solutions of this application are first briefly described.

Activity (activity): is a component that may include a user interface, and is mainly used to interact with a user, for example, making a call, taking a photo, sending an email, and viewing a map. Most of content that can be viewed by the user in an application is provided by the activity component. An application may include a plurality of activities.

Task (task): is usually a set of a series of associated activities, where these activities are arranged in a stack (stack) based on their respective starting sequence. A home screen of an electronic device is usually a start point of a task.

Foreground: A foreground service can perform some operations that a user can notice. For example, an audio application uses the foreground service to play an audio track. The foreground service usually needs to display a notification. Even if the user stops interacting with the application, the foreground service continues to run.

Background: A background service performs operations that a user does not notice. For example, if an application uses a service to compress storage space of the application, the service is usually a background service.

For ease of understanding, the following first describes concepts related to a memory management mechanism of an electronic system in embodiments of this application.

### 1. Page

In a memory management process, a page is a minimum unit of address space. Generally, a page is 4 kilobytes (kilobyte, KB) or 64 KB.

### 2. Logical memory and physical memory

Memory space of a process is only virtual memory, namely, the logical memory. Running of a program requires real physical memory, namely, a random access memory (random access memory, RAM). If necessary, an operating system can map the logical memory applied for during program running to the RAM, so that the process can use the physical memory.

### 3. Memory reclamation

For memory reclamation, an operating system needs to perform a reclamation action on a premise that data of an application is not lost. A page reclaiming manner generally includes three manners: page write-back, page swapping, and page discarding. (1) Page write-back: If a backup storage of a physical page is a block device (for example, in file mapping), memory may be directly synchronized to the block device, and a released page may be reused. (2) Page swapping: If a physical page has no backup storage (for example, in anonymous mapping), stored data can be swapped in a specific swap partition (the system usually allocates storage space on a magnetic disk as a buffer of memory, and this storage space is usually referred to as a swap area), and then swapped back to the memory when accessed again. (3) Page discarding: If a backup storage of a physical page is a file, but file content (for example, an executable file) cannot be modified in the memory, direct discarding may be performed when there is no need at present.

After an application enters the background, an operating system may perform memory reclamation in various manners when memory is insufficient, for example, perform memory reclamation in a manner like page discarding, page swapping, or page write-back, to relieve memory pressure.

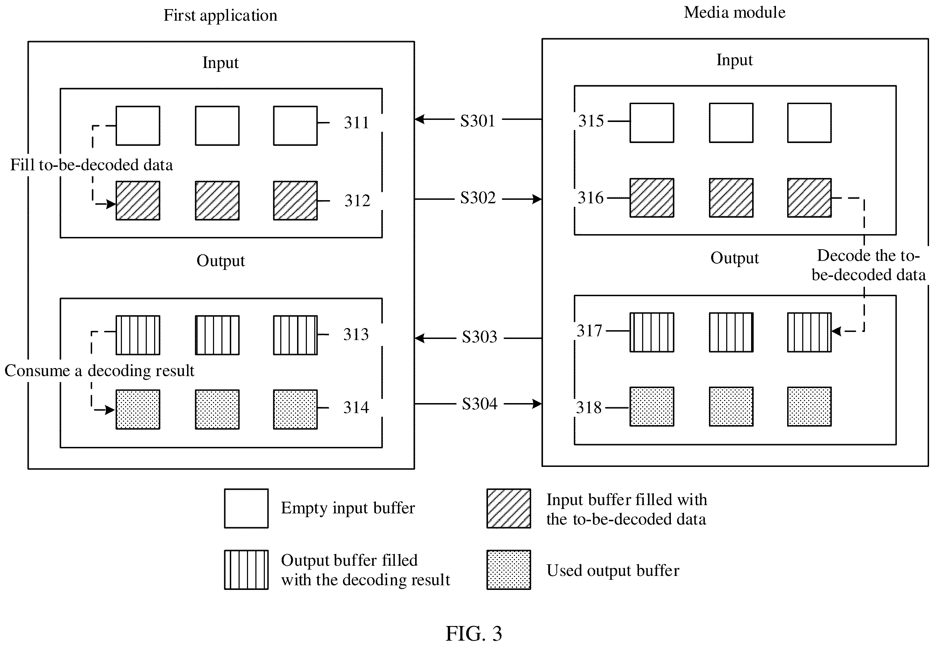

In a video playing scenario, a large quantity of buffers are used. FIG. 3 is a diagram of a buffer circulation process in a case in which a first application plays a video. The first application may be a video playing application. When playing the video, the first application first obtains an empty input buffer from a media module (S301), and fills the empty input buffer with to-be-decoded data. The first application returns the buffer filled with the to-be-decoded data to the media module for processing (S302). After obtaining the to-be-decoded data, the media module fills an output buffer with a decoding result, and returns the output buffer to the first application (S303). After obtaining and consuming the decoding result, the first application releases the output buffer to the media module (S304).

When the first application is run in the background, the buffer used when the first application plays the video is still not destructed, and occupies physical memory. As a result, memory resources of an electronic device are reduced as a quantity of video applications used by a user increases.

During video playing, the first application usually shares memory with a hardware decoder driven by the media module. The media module is a software module, and is configured to invoke the hardware decoder to decode the video played by the first application. For example, the media module may include a MediaCodec component, an Acodec component, and an OpenMAX component. In a video decoding process, the MediaCodec component is configured to interconnect with an application. The Acodec component and the OpenMAX component are specific implementations. The Acodec component is configured to be responsible for an entire decoding process, for example, may mark a status of each buffer. The OpenMAX component is configured to invoke the hardware decoder to decode the to-be-decoded data in the buffer.

The media module invokes the hardware decoder to directly access the physical memory, and a location of the physical memory is fixed. If the application does not actively notify that the memory can be released, the operating system has no mechanism for reclaiming physical memory of shared memory of the application and a device (hardware decoder). When being switched to the background, the application does not actively notify that the physical memory can be released. If the operating system actively reclaims the memory through page swapping or the like when the application is switched to the background, when the media module subsequently invokes the hardware decoder to access the physical memory, the hardware decoder still accesses the original physical memory, and the physical memory may be occupied by another process, resulting in a fault of the operating system. In addition, for the shared memory, the shared memory is allocated and released by a dedicated module (for example, a general-purpose memory manager ion). After the application is switched to the background, the module is not notified of physical memory that is no longer used, and the module cannot identify physical memory that needs to be reclaimed.

Embodiments of this application provide a memory management method, so that when a video is run in the background, physical memory related to video playing can be reclaimed, and when the video is switched back to the foreground, normal playing of the video is not affected. This improves smoothness of an operating system and user experience. The memory management method includes the following steps.

S410: Receive a first input of a user, where the first input is used to enable a first application to enter a background state.

S420: Block an interface related to access to a buffer in a first buffer set, where the buffer in the first buffer set belongs to a buffer related to decoding of a first video played by the first application.

S430: Reclaim physical memory corresponding to the buffer in the first buffer set.

When receiving the first input of the user, an electronic device may be in a state of playing the first video on an interface of the first application, where the first application may be a video application, and the first input is an input used to enable the first application to enter the background, for example, may be an input that the user swipes up at a bottom of a display or taps a home button (a virtual button, a floating button, or a physical button) on a video interface to return to a desktop or a home screen. The first input may alternatively be an input that the user displays a multi-task interface on a current video playing interface, for the first application to enter the background. For example, the user may swipe up at the bottom of the display and hold to display the multi-task interface, and the user may tap a window of another application on the multi-task interface, so that the another application is run in the foreground, and the first application is run in the background.

In this embodiment of this application, when an application enters a background state, physical memory corresponding to a part of a buffer related to decoding of a video played by the application may be reclaimed. When the first application enters the background, the electronic device may determine that physical memory reclamation can be performed on the buffer related to the first application according to the technical solution in this embodiment of this application.

In some embodiments, an activity manager service (activity management service, AMS) may monitor a status of each application, and determine that an application invoking a media module includes the first application. When the first application enters the background, the AMS may continue to monitor a running state of the first application. The AMS needs to determine that the first application has no foreground activity when entering the background, for example, when the first application is run in the background, the first video does not continue to be played in a foreground floating window; and needs to determine that the first video does not continue to be played in the background via an audio. This may be determined, for example, based on a priority of the first application, whether the first application is in a voice playing state, or the like. When the first application has no foreground activity when entering the background, the AMS may determine that the first application is an application on which physical memory reclamation can be performed according to the technical solution provided in this embodiment of this application.

In some other embodiments, the AMS may monitor a status of an application, determine that an application invoking the media module to play a video includes the first application, and may determine in advance, based on configuration information of the first application, that when the first application enters the background, the first video does not continue to be played in a foreground floating window or in the background via an audio, for example, a first list may be set, and the first list includes an identifier of an application on which physical memory reclamation can be performed according to the technical solution in this embodiment of this application after the first application enters the background. Therefore, when the first application enters the background state, the first application invokes the media module, and an identifier of the first application is in the list, so that the technical solution in this embodiment of this application is directly performed.

After the AMS determines that the first application enters the background and physical memory reclamation can be performed on the first application, the AMS may indicate the media module to reclaim the physical memory corresponding to the buffer related to decoding of the first video. For example, the AMS notifies the media module via a first message, and the media module may block the corresponding interface in S420, and reclaim the physical memory corresponding to the buffer in the first buffer set in S430. The first buffer set belongs to the buffer related to decoding of the first video played by the first application. The first buffer set may include a part of buffers held by the media module. For example, the first buffer set may include at least one of a second buffer, a third buffer, and a fourth buffer. The second buffer is an empty input buffer that is in an input buffer queue and that is held by the media module; the third buffer is an output buffer that is being filled with a decoding result and that is held by the media module; and the fourth buffer is an output buffer that is filled with a decoding result, that is to be used by the first application, that is in an output buffer queue, and that is held by the media module.

In addition to the buffers held by the media module, the first buffer set may further include a fifth buffer held by the first application, and the fifth buffer is an output buffer that is filled with a decoding result and that is held by the first application. That is, the first buffer set includes at least one of the second buffer to the fifth buffer.

The second buffer may correspond to an empty input buffer 315 held by the media module in FIG. 3; the fourth buffer may correspond to an output buffer 317 that is filled with a decoding result, that is to be consumed by the first application, and that is held by the media module; and the fifth buffer may be an output buffer 313 or 314 that is filled with a decoding result and that is held by the first application. The following specifically describes a process of reclaiming the second buffer to the fifth buffer.

The interface blocked in S420 may be related to a type of a buffer whose corresponding physical memory needs to be reclaimed. Specific descriptions are provided below with reference to descriptions of the type of the buffer. Specifically, blocking the interface may be monitoring an access status of the corresponding interface. When a corresponding process of the first application invokes or uses the interface, the corresponding process or thread that invokes or uses the interface and that is of the first application may be frozen, to avoid a system fault caused by use after free (use after free, UAS). After the corresponding interface starts to be blocked, the physical memory corresponding to the first buffer set may be reclaimed.

When the electronic device receives a second input of the user, the AMS may determine that the second input is used to switch the first application back to a foreground state, to notify the media module to rebuild physical memory, for example, notify the media module via a second message, and the media module may reallocate physical memory to the reclaimed buffer, and the corresponding interface is unblocked after allocation is completed, so that the first video enters a normal playing state again.

Certainly, after the physical memory corresponding to the buffer in the first buffer set is reclaimed, if the first application is cleared by the operating system according to a memory clearance mechanism, for example, an Android preset memory clearance mechanism (LMK, low memory killer) or is manually cleared by the user on the multi-task interface, the first application is not switched back to the foreground before being cold started next time, and physical memory does not need to be rebuilt.

Therefore, according to the foregoing steps, the physical memory of the part of the buffer used in the decoding process of the first video may be reclaimed. When the video is switched back to the foreground, normal playing of the video is not affected. This increases memory of an entire system, and improves smoothness of the system.

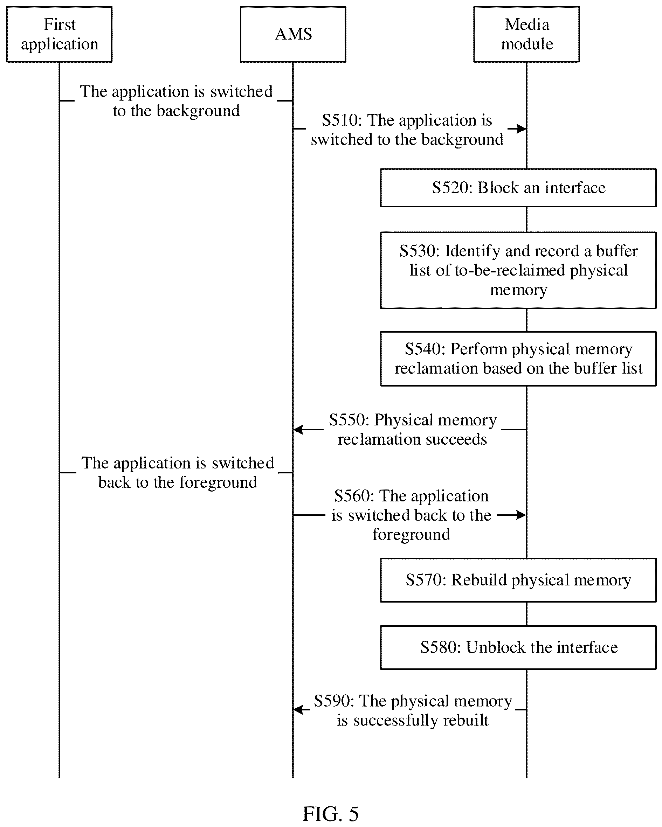

FIG. 5 is a flowchart of a whole process of reclaiming physical memory and rebuilding physical memory. As shown in FIG. 5, the method includes the following steps.

S510: An AMS notifies a media module that a first application is switched to the background.

S520: The media module blocks an interface.

In S520, the media module blocks the corresponding interface according to a reclamation policy. Details corresponding to blocking the interface are described below in detail.

S530: The media module identifies and records a buffer list of to-be-reclaimed physical memory.

S540: The media module performs physical memory reclamation based on the buffer list.

S550: The media module feeds back, to the AMS, that physical memory reclamation succeeds.

If memory reclamation fails, the physical memory may not be reclaimed, or memory may be cleared according to a preset memory clearance mechanism when the memory is insufficient.

S560: The AMS notifies the media module that the first application is switched back to the foreground.

S570: The media module rebuilds the physical memory.

S580: The media module unblocks the interface.

S590: The media module feeds back, to the AMS, that the physical memory is successfully rebuilt.

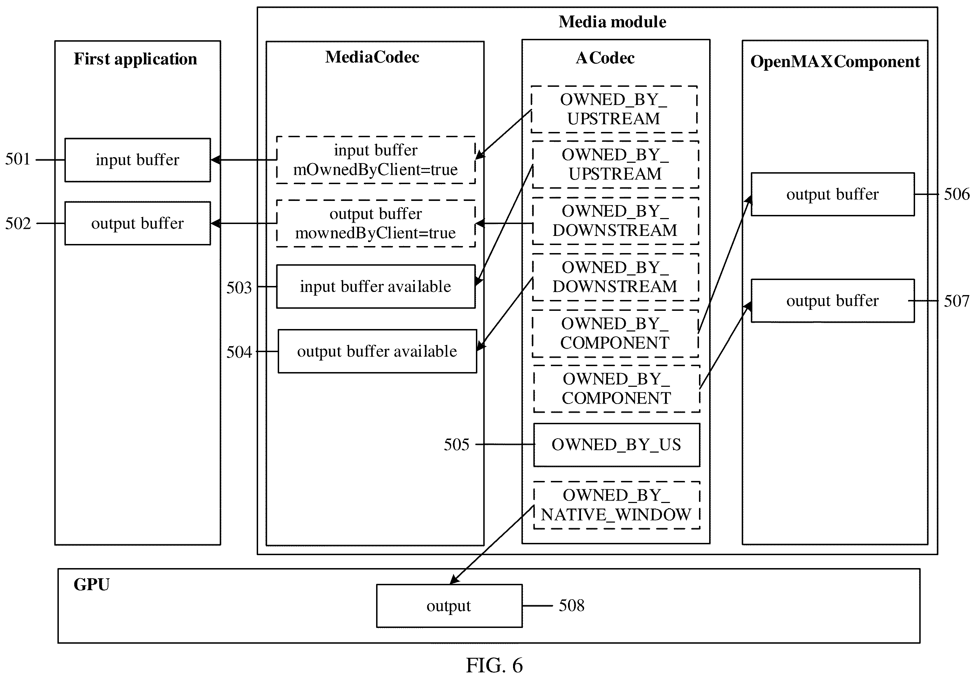

To specifically describe specific details of the technical solutions provided in embodiments of this application, FIG. 6 shows a specific case of a buffer in a decoding process of a first video.

As shown in FIG. 6, earlier than Android Q, the media module includes three components: a MediaCodec component, an Acodec component, and an OpenMAX component. In a video decoding process, the MediaCodec component invokes the OpenMAX component via the Acodec component, to invoke a hardware decoder to implement hardware coding. Currently, Google^{®} launches Codec 2.0 on Android Q to replace the Acodec component and the OpenMAX component. The following describes the specific case of the buffer in the decoding process of the first video by using only an example in which the media module includes the MediaCodec component, the Acodec component, and the OpenMAX component.

The buffer in the decoding process of the first video may be classified, based on a dependency, into a buffer held by the first application, a buffer held by the media module, and a buffer held by the display module. FIG. 6 schematically shows two buffers (a buffer 501 and a buffer 502) held by the first application, five buffers (a buffer 503, a buffer 504, a buffer 505, a buffer 506, and a buffer 507) held by the media module, and one buffer (a buffer 508) held by a display module. The buffer held by the display module is usually transferred by the media module to the display module for rendering and display. After obtaining a buffer decoded by the media module, the first application may transfer the decoded buffer to the media module at a specific speed, and the media module sends the decoded buffer for display, to control a video playing speed.

The MediaCodec component of the media module can mark who uses or holds the buffer. "mOwnedByClient=true" may mark that the buffer is held by the first application.

The Acodec component of the media module marks a status of each buffer. "OWNED_BY_UPSTREAM" may mark that the buffer is the input buffer held by the MediaCodec component or the input buffer held by the first application. "OWNED_BY_DOWNSTREAM" may mark that the buffer is the output buffer held by the MediaCodec component or the output buffer held by the first application, and the output buffer is filled with a decoding result. "OWNED_BY_COMPONENT" marks that the buffer is held by the OpenMAX component, for example, is being decoded by the OpenMAX component. "OWNED_BY_US" marks that the buffer is being processed by the Acodec component. "OWNED_BY_NATIVE_WINDOW" marks that the buffer is held by the display module.

The buffer held by the first application may include an input buffer and an output buffer. FIG. 6 shows one input buffer (the buffer 501) and one output buffer (the buffer 502, namely, a fifth buffer) held by the first application. The fifth buffer may be the buffer 313 or 314 shown in FIG. 3. The buffer 501 is marked as "input buffer mOwnedByClient=true" and "OWNED_BY_UPSTREAM", to indicate that the buffer is an input buffer and is held by the first application, and the buffer has been obtained by the first application through a "dequeueInputBuffer" interface. The buffer 502 is marked as "output buffer mOwnedByClient=true" and "OWNED_BY_DOWNSTREAM", to indicate that the buffer is an output buffer and is held by the first application, and the first application has obtained the buffer through a "dequeueOutputBuffer" interface.

The buffer held by the display module is shown by the buffer 508 in FIG. 6, is marked as "OWNED_BY_NATIVE_WINDOW", and may be transferred by the media module to a graphics processing unit (graphics processing unit, GPU), to be rendered and sent for display.

The buffer held by the media module may include an input buffer in an input queue. A buffer in the input buffer queue may include an empty input buffer (a second buffer). The empty input buffer may be shown by the buffer 503 in FIG. 6 (or may be shown by 315 in FIG. 3), the buffer 503 is marked as "input buffer available" and "OWNED_BY_UPSTREAM", to indicate that the buffer is an available empty input buffer and is held by the media module, and the buffer may be obtained by the first application through the "dequeueInputBuffer" interface, and filled with to-be-decoded data. The input buffer may further include a buffer (a sixth buffer, shown by 316 in FIG. 3) filled with to-be-decoded data. The buffer is not shown in FIG. 6, and is a buffer that is filled with the to-be-decoded data by the first application, that is just received by the media module, and whose to-be-decoded data is not used; and the buffer is quickly transferred to the Acodec component for processing.

The buffer held by the media module may further include an output buffer. The output buffer may include an output buffer (a fourth buffer) that is filled with a decoding result, that is to be obtained by the first application, and that is in an output buffer array, and the buffer may be shown by the buffer 504 in FIG. 6 (or shown by 317 in FIG. 3). The buffer 504 is marked as "output buffer available" and "OWNED_BY_DOWNSTREAM", to indicate that the buffer is the output buffer filled with the decoding result and is held by the media module. The first application may obtain the buffer through the "dequeueOutputBuffer" interface, and obtain the decoding result. The output buffer may further include an output buffer (a third buffer) that is being filled with a decoding result, and this type of output buffer may be held by the OpenMAX component, is shown by the buffer 506 and the buffer 507, and is marked as "output buffer" and "OWNED_BY_COMPONENT", to indicate that the buffer is an output buffer and is held by the OpenMAX component. The output buffer may further include a buffer (a seventh buffer) that is returned to the media module after being obtained by the first application, and the buffer is not shown in FIG. 6, and may be shown by 318 in FIG. 3. After being obtained by the MediaCodec component of the media module, the buffer is quickly transferred to the Acodec component and then sent to the display module for rendering and display.

The buffer held by the media module may further include a buffer that is being processed by the Acodec component, and the buffer is shown by the buffer 505 in FIG. 6. The buffer 505 is marked as "OWNED_BY_US", to indicate that the buffer is being processed by the Acodec component.

A first buffer set may include one or more of the second buffer, the third buffer, the fourth buffer, and the fifth buffer. An interface blocked by an electronic device is related to a buffer in the first buffer set of to-be-reclaimed physical memory.

In this embodiment of this application, when the first application enters the background and playing of the first video is stopped, a decoding activity of the first video is stopped, and the OpenMAX component no longer transfers the input buffer or the output buffer to the Acodec component. Therefore, the blocked interface may include an interface used by the first application to obtain the input buffer or the output buffer, to reduce a possibility that because most buffers are held by the OpenMAX component, an error occurs (there is no input buffer or output buffer in an input or output buffer queue) when the first application requests the input buffer or the output buffer, and the first application no longer uses the media module, causing a problem in video playing.

Specifically, when the first buffer set includes the second buffer, the second buffer is an empty input buffer in the input queue, namely, an empty input buffer held by the media module, as shown by the buffer 503 shown in FIG. 6. Because the buffer in the input queue does not store any data, physical memory corresponding to the buffer may be directly reclaimed. When the first application is switched back to the foreground, and needs to rebuild the physical memory corresponding to the second buffer, data restoration is not involved, and the physical memory is directly allocated.

When the first buffer set further includes the third buffer, the third buffer is a buffer that is being filled with a decoding result, or may be referred to as a buffer held by the OpenMAX component or a buffer that is partially filled with a decoding result. Because the third buffer is filled with the decoding result, subsequent restoration of the decoding result needs to be considered when physical memory is reclaimed.

In an embodiment, the physical memory corresponding to the third buffer may be reclaimed after the decoding result is stored. For example, the decoding result may be compressed, and the compressed decoding result is swapped to a swap area of memory or an external storage medium in a page swapping process, or the compressed decoding result may be transferred to another location in the memory (for example, if the decoding result is compressed from 4 KB to 2 KB, the compressed decoding result may be transferred from original physical memory location corresponding to the buffer to continuous 2 KB physical memory in the memory). Then, the physical memory corresponding to the third buffer is reclaimed. After physical memory is reallocated to the third buffer, the reallocated physical memory may be filled with the compressed decoding result, and the compressed decoding result is decompressed. For another example, the decoding result may not be compressed, and is directly swapped to a swap area of memory or an external storage medium in a page swapping form. After physical memory is reallocated to the third buffer, the decoding result may be swapped in the reallocated physical memory.

In another embodiment, the decoding result in the third buffer may be discarded, but a decoding location in the third buffer is recorded. After physical memory is reallocated, the OpenMAX component re-decodes this data based on the decoding location, and fills the reallocated physical memory with the decoding result.

When the first buffer set may include the fourth buffer, the fourth buffer is a buffer in the output buffer queue, and the buffer is a buffer that is filled with a decoding result and that is to be obtained or used by the first application. Before physical memory corresponding to the fourth buffer is reclaimed, original data restoration after physical memory is rebuilt also needs to be considered. Because the decoding result cannot be decoded again after the first application is switched back to the foreground, the decoding result in the fourth buffer needs to be stored.

In the fourth buffer same as the third buffer, the decoding result may be directly stored in a compressed or uncompressed manner. For example, after the decoding result is compressed and stored in another location, the physical memory corresponding to the fourth buffer is reclaimed. After physical memory is reallocated to the fourth buffer, compressed data may be decompressed, and then the reallocated physical memory may be filled. For another example, the decoding result may be directly swapped out of the current physical memory in a page swapping manner, for example, swapped to a location like a memory swap area or an external storage medium. After the physical memory is reallocated, the decoding result is swapped in the allocated physical memory.

When the first buffer set includes the fifth buffer, for reclamation of the fifth buffer, in an embodiment, a decoding result in the fifth buffer may be directly discarded, and physical memory corresponding to the fifth buffer is reclaimed. After the first application is switched back to the foreground, physical memory is reallocated to the fifth buffer. Therefore, when the first video continues to be played, the decoding result in the fifth buffer held by the first application is discarded, and is not sent for display. Discarding a part of frames of the first video may result in frame freezing in a case in which video playing is just resumed.

In another embodiment, same as the fourth buffer, the fifth buffer may also be reclaimed in a page swapping manner and in a compressed or uncompressed manner. For a specific process, refer to the foregoing description. Details are not described herein again.

When the first buffer set includes the fifth buffer, an interface used by the first application to release the fifth buffer needs to be blocked, to avoid a possibility that the media module accesses the fifth buffer after the first application releases the fifth buffer, resulting in a system fault.

In this embodiment of this application, the reclamation policy may be determined based on current memory usage. For example, when the electronic device is a first memory insufficiency state (for example, usage is greater than a threshold, memory usage is greater than a threshold, remaining memory is less than a threshold, and a remaining memory percentage is less than a threshold), the first buffer set includes only the buffers, held by the media module, in the second buffer to the fifth buffer; and when the electronic device is in a second memory insufficiency state, the first buffer set further includes the buffers, held by the first application, in the second buffer to the fifth buffer. Memory in the second memory insufficiency state is even more insufficient than that in the first memory insufficiency state. Therefore, an appropriate physical memory reclamation policy may be selected based on a memory state of the electronic device, to reclaim more physical memory when memory is increasingly insufficient. Certainly, the foregoing policy is merely an example. For example, more levels of memory insufficiency states may be further set for the electronic device, for example, a third memory insufficiency state is added. A memory insufficiency degree of the third memory insufficiency state is lower than that of the first memory insufficiency state and that of the second memory insufficiency state. In addition, in the first memory insufficiency state, only the second buffer may be reclaimed, and data restoration may not need to be performed when the second buffer is reclaimed, so that implementation of the memory reclamation policy is simpler. For another example, a buffer in a same state may be reclaimed in different reclaiming manners in different memory insufficiency states. The fifth buffer is used as an example. In the first memory insufficiency state, the decoding result in the fifth buffer may be directly discarded for reclamation; and in the second memory insufficiency state, the decoding result in the fifth buffer may be stored in, for example, the memory swap area, for reclamation. A specific policy for performing memory reclamation may be determined based on an actual situation, and details are not described herein.

Before reclaiming physical memory corresponding to a buffer, the media module may determine a status of each buffer, set a buffer reclamation list based on the status of the buffer, and perform, based on the list after reclamation, a physical memory rebuilding process of the buffer whose physical memory is reclaimed.

In addition, in this embodiment of this application, when the first application enters the background, the media module may first start to block a corresponding interface according to a reclaiming policy, and may wait for preset duration before reclaiming memory, where the preset duration may be determined based on experience or historical processing data of the media module, for example, 200 ms, so that the media module continues processing in this part of time. The media module may alternatively wait for preset duration before a status of a buffer is determined. For example, in the preset duration, the media module may consume data in the buffer (the sixth buffer) that is filled with the to-be-decoded data and that is transferred by the first application, so that the buffer becomes an empty input buffer. For another example, in the preset duration, the Acodec component may transfer, to the MediaCodec component, the processed output buffer that is filled with the decoding result, so that the buffer can become the buffer (the fourth buffer) whose physical memory can be reclaimed. In this way, categories of buffers of to-be-reclaimed physical memory are reduced, and physical memory corresponding to a large quantity of buffers can be reclaimed.

Types of buffers that can be reclaimed in the technical solutions in embodiments of this application are described above. For different reclamation policies, the media module needs to block corresponding interfaces, to prevent the first application from accessing an address of a buffer of released physical memory.

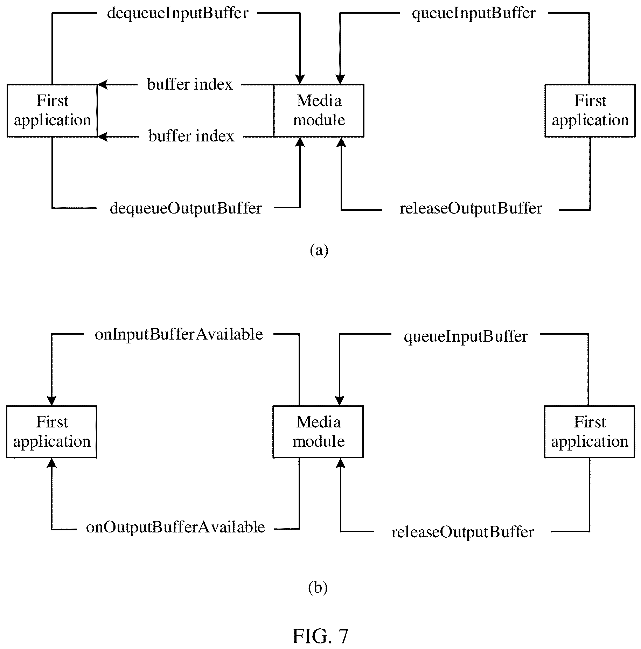

Specifically, when interacting with the media module, the first application may obtain an input buffer or an output buffer in a synchronous mode and an asynchronous mode. (a) in FIG. 7 shows interfaces used by the first application in the synchronous mode to obtain and release input or output buffers. In the synchronous mode, the first application actively obtains an input buffer and an output buffer from the media module. The first application obtains an empty input buffer (the second buffer) from the media module through a dequeueInputBuffer() interface, and obtains, from the media module through a dequeueOutputBuffer() interface, an output buffer (the fourth buffer) filled with a decoding result. The media module returns a buffer index (buffer index) to the first application, so that the first application can obtain the corresponding input or output buffer. After filling the empty input buffer with to-be-decoded data, the first application may transfer the to-be-decoded data to the media module through a queueInputBuffer() interface; and after using the output buffer filled with the decoding result, the first application may release an output buffer (the fifth buffer) through a releaseOutputBuffer() interface.

(b) in FIG. 7 shows interfaces used by the first application in the asynchronous mode to obtain and release input or output buffers. In the asynchronous mode, the media module actively releases an available buffer to the first application. When determining that there is an idle input buffer, the media module may release the input buffer to the first application through an onInputBufferAvailable() interface. After obtaining the input buffer, the first application fills the input buffer with to-be-decoded data, and transfers the buffer to the media module through a queueInputBuffer() interface. After decoding is completed, the media module releases an output buffer filled with a decoding result to the first application through an onOutputBufferAvailable() interface. After using the decoding result, the first application may release the output buffer through a releaseOutputBuffer() interface.

In the synchronous mode, the dequeueInputBuffer() interface and the dequeueOutnputBuffer() interface may be blocked, to prevent the first application from actively obtaining the input or output buffer.

In the asynchronous mode, the onInputBufferAvailable() interface and the onOutputBufferAvailable() interface may be blocked, to prevent the media module from actively releasing the input or output buffer.

When the first buffer set includes (the fifth buffer), an interface used by the first application to release the buffer may be blocked. Specifically, the releaseOutputBuffer() interface may be blocked, to prevent the media module from accessing a corresponding address after the first application releases the output buffer.

As described above, blocking the corresponding interface may be freezing a process or thread that is of the first application and that uses the interface, to avoid a case in which because error code is directly returned, some applications consider that an error occurs in the media module, and do not continue to use the media module. Certainly, if an application does not consider, due to return of the error code, that the error occurs in the media module, and still continues to use the media module, the error code may be directly returned to a related application, and a corresponding process or thread of the application is not frozen.

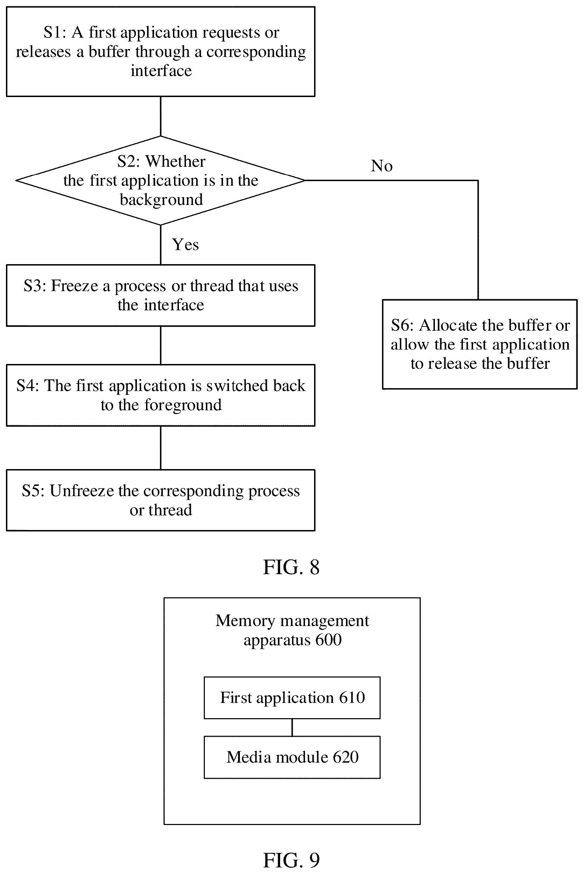

FIG. 8 shows an interface blocking process, including the following steps:
S1: A first application requests or releases a buffer through a corresponding interface.

The corresponding interface may be determined according to a policy used by the first application to reclaim physical memory. The interface includes an interface used by the first application to obtain an input or output buffer, and may further include an interface used by the first application to release an output buffer. For example, when the first application does not need to reclaim the fifth buffer mentioned above when reclaiming the physical memory, the corresponding interface does not include a releaseOutputBuffer() interface.

S2: Determine whether the first application is in the background.

S3: When the first application is in the background, freeze a process or thread that uses the interface.

When the first application is run in the background, the physical memory corresponding to the buffer corresponding to the first application has been reclaimed, and the process or thread that uses the interface may be frozen.

S4: The first application is switched to the foreground.

S5: Unfreeze the corresponding process or thread.

S6: When the first application is not in the background, through the interface used by the first application, allocate the buffer or allow the first application to release the buffer.

FIG. 9 shows a memory management apparatus 600 according to an embodiment of this application. The memory management apparatus 600 includes a first application 610 and a media module 620. Optionally, the memory management apparatus 600 may further include an activity manager service.

Specifically, the memory management apparatus 600 includes: the first application 610, configured to receive a first input of a user, where the first input is used to enable the first application 610 to enter a background state; and the media module 620, configured to: block an interface related to access to a buffer in a first buffer set, where the buffer in the first buffer set belongs to a buffer related to decoding of a first video played by the first application 610; and reclaim physical memory corresponding to the buffer in the first buffer set.

In this embodiment of this application, the first application 610 is further configured to receive a second input of the user, where the second input is used to switch the first application 610 back to a foreground state. The media module 620 is further configured to reallocate physical memory to the buffer in the first buffer set, and unblock the interface related to the access to the buffer in the first buffer set.

In this embodiment of this application, the first buffer set includes at least one of a second buffer, a third buffer, a fourth buffer, and a fifth buffer, where the second buffer is an empty input buffer that is in an input buffer queue and that is held by the media module 620; the third buffer is an output buffer that is being filled with a decoding result and that is held by the media module 620; the fourth buffer is an output buffer that is filled with a decoding result, that is to be used by the first application 610, that is in an output buffer queue, and that is held by the media module 620; the fifth buffer is an output buffer that is filled with a decoding result and that is held by the first application 610; and the media module 620 is configured to decode the first video.

In this embodiment of this application, the media module 620 is specifically configured to: when at least one process or thread of the first application 610 uses the interface related to the access to the buffer in the first buffer set, freeze the at least one process or thread of the first application 610; and unfreeze the at least one process or thread of the first application 610.

In this embodiment of this application, when the first buffer set includes the third buffer, the media module 620 is specifically configured to: record a decoding location corresponding to the decoding result filling the third buffer, and reclaim physical memory corresponding to the third buffer; and reallocate physical memory to the third buffer, re-decode, based on the decoding location, data corresponding to the decoding result, and then fill the reallocated physical memory; or compress the decoding result filling the third buffer, and reclaim physical memory corresponding to the third buffer; and reallocate physical memory to the third buffer, decompress the compressed decoding result, and then fill the reallocated physical memory; or swap out, through page swapping, the decoding result filling the third buffer, and reclaim physical memory corresponding to the third buffer; and reallocate physical memory to the third buffer, and swap the swapped-out decoding result in the reallocated physical memory.

In this embodiment of this application, when the first buffer set includes the fourth buffer, the media module 620 is specifically configured to: compress the decoding result filling the fourth buffer, and reclaim physical memory corresponding to the fourth buffer; and reallocate physical memory to the fourth buffer, decompress the compressed decoding result, and then fill the reallocated physical memory; or swap out the decoding result in the fourth buffer through page swapping, and reclaim physical memory corresponding to the fourth buffer; and reallocate physical memory to the fourth buffer, and swap the swapped-out decoding result in the reallocated physical memory.

In this embodiment of this application, when the first buffer set includes the fifth buffer, the media module 620 is specifically configured to: discard the decoding result filling the fifth buffer, and reclaim physical memory corresponding to the fifth buffer; or compress the decoding result filling the fifth buffer, reclaim physical memory corresponding to the fifth buffer, reallocate physical memory to the fifth buffer, decompress the compressed decoding result, and then fill the reallocated physical memory; or swap out the decoding result in the fifth buffer through page swapping, reclaim physical memory corresponding to the fifth buffer, reallocate physical memory to the fifth buffer, and swap the swapped-out decoding result in the reallocated physical memory.

In this embodiment of this application, the interface related to the access to the buffer in the first buffer set includes a first interface and a second interface. The first interface is used by the first application 610 to obtain the second buffer, and the second interface is used by the first application 610 to obtain the fourth buffer.

In this embodiment of this application, when the first application 610 uses the media module 620 in a synchronous mode, the first interface is used by the first application 610 to actively obtain the second buffer, and the second interface is used by the first application 610 to actively obtain the fourth buffer; or when the first application 610 uses the media module 620 in an asynchronous mode, the first interface is used by the first application 610 to obtain the second buffer actively released by the media module 620, and the second interface is used by the first application 610 to obtain the fourth buffer actively released by the media module 620.

In this embodiment of this application, before reclaiming the physical memory corresponding to the buffer in the first buffer set, the media module 620 is further configured to wait for preset duration, where the preset duration is used by the media module 620 to consume data in a sixth buffer, and the sixth buffer is an input buffer that is filled with to-be-decoded data and that is transferred by the first application 610 to the media module 620.

In this embodiment of this application, the apparatus further includes an activity manager service, configured to: send a first message to the media module based on the first input, where the first message indicates that the buffer related to decoding of the first video can be reclaimed; and send a second message to the media module 620 based on the second input, where the second message indicates to switch the first application back to the foreground.

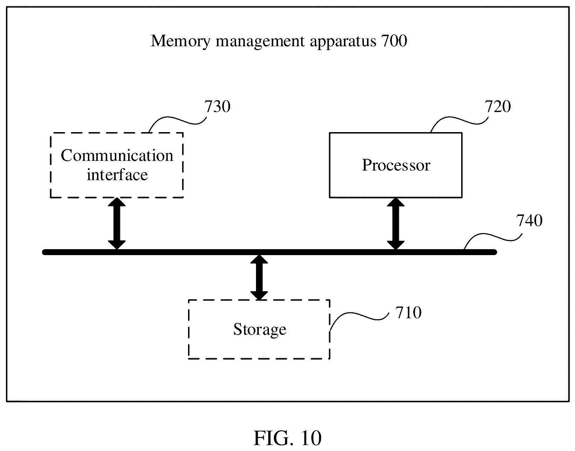

FIG. 10 shows a memory management apparatus 700 according to an embodiment of this application. The memory management apparatus 700 may be a specific example of the memory management apparatus in FIG. 9. The memory management apparatus 700 includes a processor 720. In this embodiment of this application, the processor 720 is configured to implement a corresponding control and management operation. For example, the processor 720 is configured to support the memory management apparatus 700 to perform the method, the operation, or the function in the foregoing embodiments. Optionally, the memory management apparatus 700 may further include a storage 710 and a communication interface 730. The processor 720, the communication interface 730, and the storage 710 may be connected to each other or connected to each other through a bus 740. The communication interface 730 is configured to support an electronic device to communicate with another device and the like. The storage 710 is configured to store program code and data of the electronic device. The processor 720 invokes the code or the data stored in the storage 710 to implement a corresponding operation. The storage 710 may be or may not be coupled to the processor. Coupling in embodiments of this application may be an indirect coupling or a communication connection between electronic devices, units, or modules in an electrical form, a mechanical form, or another form, and is used for information exchange between the electronic devices, the units, or the modules.

The processor 720 may be a central processing unit, a general-purpose processor, a digital signal processor, an application-specific integrated circuit, a field-programmable gate array or another programmable logic device, a transistor logic device, a hardware component, or any combination thereof. The processor may implement or execute various example logical blocks, modules, and circuits described with reference to content disclosed in this application. The processor may alternatively be a combination for implementing a computing function, for example, a combination including one or more microprocessors and a combination of a digital signal processor and a microprocessor. The communication interface 730 may be a transceiver, a circuit, a bus, a module, or another type of communication interface. The bus 740 may be a peripheral component interconnect (peripheral component interconnect, PCI) bus, an extended industry standard architecture (extended industry standard architecture, EISA) bus, or the like. The bus may be classified into an address bus, a data bus, a control bus, or the like. For ease of representation, only one bold line is used for representation in FIG. 7, but this does not mean that there is only one bus or only one type of bus.

A person of ordinary skill in the art may be aware that, in combination with the examples described in embodiments disclosed in this specification, units and algorithm steps can be implemented by electronic hardware or a combination of computer software and electronic hardware. Whether the functions are performed by hardware or software depends on particular applications and design constraints of technical solutions. A person skilled in the art may use different methods to implement the described functions for each particular application, but it should not be considered that this implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in another manner. For example, the described apparatus embodiments are merely examples. For example, division into the units is merely logical function division. There may be another division manner during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in an electrical form, in a mechanical form, or in another form.

The units described as separate parts may or may not be physically separate, and parts displayed as units may or may not be physical units, may be located at one location, or may be distributed on a plurality of network units. Some or all of the units may be selected based on actual requirements to achieve the objectives of the solutions of embodiments.

In addition, functional units in embodiments of this application may be integrated into one processing unit, or each of the units may exist alone physically, or two or more units may be integrated into one unit.

When the functions are implemented in the form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, a network device, or the like) to perform all or some of the steps of the methods described in embodiments of this application. The foregoing storage medium includes any medium that can store program code, such as a USB flash drive, a removable hard disk drive, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A memory management method, applied to an electronic device, and comprising:
receiving a first input of a user, wherein the first input is used to enable a first application to enter a background state;
blocking an interface related to access to a buffer in a first buffer set, wherein the buffer in the first buffer set belongs to a buffer related to decoding of a first video played by the first application; and
reclaiming physical memory corresponding to the buffer in the first buffer set.

2. The method according to claim 1, wherein the method further comprises:
receiving a second input of the user, wherein the second input is used to switch the first application back to a foreground state;
reallocating physical memory to the buffer in the first buffer set; and
unblocking the interface related to the access to the buffer in the first buffer set.

3. The method according to claim 2, wherein the first buffer set comprises at least one of a second buffer, a third buffer, a fourth buffer, and a fifth buffer, wherein the second buffer is an empty input buffer that is in an input buffer queue and that is held by a media module; the third buffer is an output buffer that is being filled with a decoding result and that is held by the media module; the fourth buffer is an output buffer that is filled with a decoding result, that is to be used by the first application, that is in an output buffer queue, and that is held by the media module; the fifth buffer is an output buffer that is filled with a decoding result and that is held by the first application; and the media module is configured to decode the first video.

4. The method according to claim 2 or 3, wherein
blocking the interface related to the access to the buffer in the first buffer set comprises: freezing at least one process or thread of the first application when the at least one process or thread of the first application uses the interface related to the access to the buffer in the first buffer set; and/or
unblocking the interface related to the access to the buffer in the first buffer set comprises: unfreezing the at least one process or thread of the first application.

5. The method according to claim 3, wherein when the first buffer set comprises the third buffer,
reclaiming the physical memory corresponding to the buffer in the first buffer set comprises: recording a decoding location corresponding to the decoding result filling the third buffer, and reclaiming physical memory corresponding to the third buffer; and reallocating the physical memory to the buffer in the first buffer set comprises: reallocating physical memory to the third buffer, re-decoding, based on the decoding location, data corresponding to the decoding result, and then filling the reallocated physical memory;
or
reclaiming the physical memory corresponding to the buffer in the first buffer set comprises: compressing the decoding result filling the third buffer, and reclaiming physical memory corresponding to the third buffer; and reallocating the physical memory to the buffer in the first buffer set comprises: reallocating physical memory to the third buffer, decompressing the compressed decoding result, and then filling the reallocated physical memory;
or
reclaiming the physical memory corresponding to the buffer in the first buffer set comprises: swapping out, through page swapping, the decoding result filling the third buffer, and reclaiming physical memory corresponding to the third buffer; and reallocating the physical memory to the buffer in the first buffer set comprises: reallocating physical memory to the third buffer, and swapping the swapped-out decoding result in the reallocated physical memory.

6. The method according to claim 3 or 5, wherein when the first buffer set comprises the fourth buffer,
reclaiming the physical memory corresponding to the buffer in the first buffer set comprises: compressing the decoding result filling the fourth buffer, and reclaiming physical memory corresponding to the fourth buffer; and reallocating the physical memory to the buffer in the first buffer set comprises: reallocating physical memory to the fourth buffer, decompressing the compressed decoding result, and then filling the reallocated physical memory;
or
reclaiming the physical memory corresponding to the buffer in the first buffer set comprises: swapping out the decoding result in the fourth buffer through page swapping, and reclaiming physical memory corresponding to the fourth buffer; and reallocating the physical memory to the buffer in the first buffer set comprises: reallocating physical memory to the fourth buffer, and swapping the swapped-out decoding result in the reallocated physical memory.

7. The method according to any one of claims 1 to 6, wherein the interface related to the access to the buffer in the first buffer set comprises a first interface and a second interface, the first interface is used by the first application to obtain the second buffer, and the second interface is used by the first application to obtain the fourth buffer.

8. The method according to claim 7, wherein
when the first application uses the media module in a synchronous mode, the first interface is used by the first application to actively obtain the second buffer, and the second interface is used by the first application to actively obtain the fourth buffer; or
when the first application uses the media module in an asynchronous mode, the first interface is used by the first application to obtain the second buffer actively released by the media module, and the second interface is used by the first application to obtain the fourth buffer actively released by the media module.

9. A memory management apparatus, comprising:
a first application, configured to receive a first input of a user, wherein the first input is used to enable a first application to enter a background state; and
a media module, configured to:
block an interface related to access to a buffer in a first buffer set, wherein the buffer in the first buffer set belongs to a buffer related to decoding of a first video played by the first application; and
reclaim physical memory corresponding to the buffer in the first buffer set.

10. The apparatus according to claim 9, wherein
the first application is further configured to receive a second input of the user, wherein the second input is used to switch the first application back to a foreground state; and
the media module is further configured to:
reallocate physical memory to the buffer in the first buffer set; and
unblock the interface related to the access to the buffer in the first buffer set.

11. The apparatus according to claim 10, wherein the first buffer set comprises at least one of a second buffer, a third buffer, a fourth buffer, and a fifth buffer, wherein the second buffer is an empty input buffer that is in an input buffer queue and that is held by the media module; the third buffer is an output buffer that is being filled with a decoding result and that is held by the media module; the fourth buffer is an output buffer that is filled with a decoding result, that is to be used by the first application, that is in an output buffer queue, and that is held by the media module; the fifth buffer is an output buffer that is filled with a decoding result and that is held by the first application; and the media module is configured to decode the first video.

12. The apparatus according to claim 10 or 11, wherein
the media module is specifically configured to:
freeze at least one process or thread of the first application when the at least one process or thread of the first application uses the interface related to the access to the buffer in the first buffer set; and/or
unfreeze the at least one process or thread of the first application.

13. The apparatus according to claim 11, wherein when the first buffer set comprises the third buffer, the media module is specifically configured to:
record a decoding location corresponding to the decoding result filling the third buffer, and reclaim physical memory corresponding to the third buffer; and reallocate physical memory to the third buffer, re-decode, based on the decoding location, data corresponding to the decoding result, and then fill the reallocated physical memory;
or
compress the decoding result filling the third buffer, and reclaim physical memory corresponding to the third buffer; and reallocate physical memory to the third buffer, decompress the compressed decoding result, and then fill the reallocated physical memory;
or
swap out, through page swapping, the decoding result filling the third buffer, and reclaim physical memory corresponding to the third buffer; and reallocate physical memory to the third buffer, and swap the swapped-out decoding result in the reallocated physical memory.

14. The apparatus according to claim 11 or 13, wherein when the first buffer set comprises the fourth buffer, the media module is specifically configured to:
compress the decoding result filling the fourth buffer, and reclaim physical memory corresponding to the fourth buffer; and reallocate physical memory to the fourth buffer, decompress the compressed decoding result, and then fill the reallocated physical memory;
or
swap out the decoding result in the fourth buffer through page swapping, and reclaim physical memory corresponding to the fourth buffer; and reallocate physical memory to the fourth buffer, and swap the swapped-out decoding result in the reallocated physical memory.

15. The apparatus according to any one of claims 9 to 14, wherein the interface related to the access to the buffer in the first buffer set comprises a first interface and a second interface, the first interface is used by the first application to obtain the second buffer, and the second interface is used by the first application to obtain the fourth buffer.

16. The apparatus according to claim 15, wherein
when the first application uses the media module in a synchronous mode, the first interface is used by the first application to actively obtain the second buffer, and the second interface is used by the first application to actively obtain the fourth buffer; or
when the first application uses the media module in an asynchronous mode, the first interface is used by the first application to obtain the second buffer actively released by the media module, and the second interface is used by the first application to obtain the fourth buffer actively released by the media module.

17. The apparatus according to claim 11, wherein the apparatus further comprises an activity manager service, configured to:
send a first message to the media module based on the first input, wherein the first message indicates that the buffer related to decoding of the first video can be reclaimed; and
send a second message to the media module based on the second input, wherein the second message indicates to switch the first application back to the foreground.

18. An electronic device, comprising one or more processors and one or more storages, wherein the one or more storages store one or more computer programs, the one or more computer programs comprise instructions, and when the instructions are executed by the one or more processors, the memory management method according to any one of claims 1 to 8 is performed.

19. A chip, comprising a processor and a communication interface, wherein the communication interface is configured to receive a signal and transmit the signal to the processor, and the processor processes the signal, so that the memory management method according to any one of claims 1 to 8 is performed.

20. A readable storage medium, wherein the readable storage medium stores instructions, and when the instructions are run on a computer, the memory management method according to any one of claims 1 to 8 is performed.
